# EUROPEAN PATENT APPLICATION

(11) **EP 2 182 479 A1**
(43) Date of publication of application: **05.05.2010**
(21) Application number: 08305767.9
(22) Date of filing: 03.11.2008
(51) Int. Cl.: G06Q 20/00

(54) **A method for communicating an authorization response cryptogram to an external entity, and a corresponding system**

(71) Applicant: Gemalto SA, 92190 Meudon (FR)
(72) Inventor: Meunier, Alain, 92120, MEUDON (FR); Godbert, Sylvain, 75014, PARIS (FR); Le Cloirec, Nicolas, 78110, LE VESINET (FR)
(74) Representative: Scheer, Luc

(57) **Abstract**

The invention relates to a method 30 for communicating an authorization response cryptogram, said ARPC, to an external entity, such as notably a token 12. The token is connected to a first server 18.

According to the invention, the method comprises steps in which the token sends, through the first server, to one and the same server 110 dedicated to generating an ARPC, said ARPC generation server, pieces of data 32 including at least an authorization request cryptogram, said ARQC, the ARPC generation server generates an ARPC based upon the received ARQC, and the ARPC generation server sends, through the first server, to the token, the generated ARPC 38.

The invention relates also to a corresponding system comprising the first server 18 and the server 110 dedicated to generating an ARPC.

## Description

### Field of the invention:

The invention relates, in a general manner, to a method for communicating an authorization response cryptogram to an external entity, such as notably a token.

Moreover, the invention relates to a system for communicating an authorization response cryptogram to an external entity, notably a token.

Within the present description, a token is any portable smart object that is intended to communicate with the outside world. The token is likely to cooperate with a host device, so as to communicate with an external entity.

### State of the art:

As known per se, a banking application embedded within a SIM (acronym for "Subscriber Identity Module") type smart card, thanks to a mobile phone equipped with a NFC (acronym for "Near Field Communication") chip, allows a user to perform a payment transaction, such as a money debit of a user bank account.

To reset a bank counter(s), such as Europay, Mastercard and VISA (or EMV) counter(s), stored within the SIM card and relating to the user, the SIM card sends, through an Over-The-Air (or OTA) server and a gateway server, to a banking system some pieces of data including an Authorization ReQuest Cryptogram (or ARQC). Then, the banking system generates, thanks to the received ARQC, a corresponding Authorization ResPonse Cryptogram (or ARPC). The banking system sends back the generated ARPC, through the gateway server and the OTA server, to the SIM card.

As known per se, the ARQC constitutes data relating to a request to be sent to an ARPC issuer that authenticates the sender of the ARPC and gives an authorization for a payment transaction. Likewise, the ARPC constitutes data relating to a response to be sent to the ARQC issuer. The response contains an authorization for a payment transaction and a cryptogram for authenticating the ARPC issuer.

However, the known solution has a major disadvantage.

As a matter of fact, the communication of the generated ARPC to the SIM card, as token, is complicated and long.

### Summary of the invention:

The invention eliminates such a major disadvantage by providing a method for communicating an authorization response cryptogram, said ARPC, to an external entity, such as notably a token. The token is connected to a first server.

According to the invention, the method comprises the following steps. The token sends, through the first server, to one and the same server dedicated to generating an ARPC, said ARPC generation server, pieces of data including at least an authorization request cryptogram, said ARQC. The ARPC generation server generates an ARPC based upon the received ARQC. And the ARPC generation server sends, through the first server, to the token, the generated ARPC.

The principle of the invention consists in that a token (as a communicating entity) transmits an ARQC, through an intermediary server (namely a first server), to a targeted server adapted to issue an ARPC. The targeted server issues the ARPC to the token having provided the ARQC.

Accordingly, contrary to the aforementioned known solution, the proposed solution does not require any connection to a gateway server, as an intermediary node between the OTA server, as a first server, and a banking system, to perform a conversion of communication protocols between the one used at the OTA server side and the other one used at the banking system side.

Furthermore, still contrary to the aforementioned known solution, the proposed solution does not involve notably a banking system comprising a complicated structure of interconnections of networks. As known per se, the banking system includes, on the one hand, an acquiring network to be connected to the gateway server, and on the other hand, a bank issuing network to be connected to the acquiring network. The bank issuing network issues the ARPC that has then to be forwarded, through the acquiring network, the gateway server and the OTA server, to the SIM card, as token.

The proposed solution allows to reduce a count of the involved entities to deliver an ARPC to a requesting token with respect to the known solution, and is therefore simpler than the known solution. As a matter of fact, the proposed solution does require neither a use of gateway server, nor a use of an acquiring network of a bank, nor a use of a bank issuing network.

Thus, the ARPC generation of the proposed solution involving only two servers allows a requesting token to receive an ARPC, in a quicker and cheaper manner than with the ARPC generation of the known solution requiring an involvement of a gateway server and a banking system.

According to a further aspect, the invention is a system for communicating an authorization response cryptogram, said ARPC, to an external entity, such as notably a token.

According to the invention, the system comprises a first server and one and the same server dedicated to generating an ARPC, said ARPC generation server. The ARPC generation server is adapted to receive pieces of data including at least an authorization request cryptogram, said ARQC, generate an ARPC based upon the received ARQC, and send the generated ARPC, through the first server, to the external entity.

The proposed system includes a first server that is directly connected to an ARPC issuer server. Thus, the first server constitutes a single access point to the ARPC issuer server. Moreover, the two servers may exchange data by using a single communication protocol.

Accordingly, the proposed system does not comprise any further intermediary entity(ies) between the first server and the ARPC issuer server. The proposed system constitutes a simple and cheap architecture that is also simple and cheap to implement.

It is to be noted that, as token, it can be any electronic device comprising at least one microprocessor, at least one memory or being connected to one memory, and an Input/Output communication interface. The token can constitute any electronic support that may have different form factors. For example, it can be embodied within a dongle of the USB (acronym for "Universal Serial Bus") type, a smart card or a chip to be removably linked to a host device or termed terminal.

As terminal, it can be, for example, a mobile telephone, a PDA (acronym for "Personal Digital Assistant"), a Personal Computer (or PC) or a mobile laptop being likely able to cooperate with a token.

### Brief description of the drawings:

Additional features and advantages of the invention will be more clearly understandable after reading a detailed description of one preferred embodiment of the invention, given as an indicative and non-limitative example, in conjunction with the following drawings:
- Figure 1 illustrates a simplified diagram of an embodiment of an electronic system comprising an over-the-air server and an ARPC generator server connected to the OTA server, the system being connected to a mobile telephone and a SIM type smart card coupled to the mobile telephone, the system being adapted to issue the ARPC to the SIM type smart card according to the invention;
- Figure 2 represents a simplified diagram of an embodiment of the ARPC generator server of the system of figure 1; and
- Figure 3 is an example of a message flow between the smart card and the ARPC generator server of figure 2.

### Detailed description:

Herein under is considered a case in which the invention method for communicating an authorization response cryptogram to an external entity is implemented by an OTA server, as a first server, and an ARPC generation server, as a web server, connected to the OTA server.

However, according to another embodiment (not represented), the external entity directly addresses one and the same server, as an ARPC generation server, as a web server, i.e. without any intermediary server (such as an OTA server), by transmitting it an ARQC. Likewise, the ARPC generation server directly addresses the external entity, as a web server, by transmitting it a corresponding ARPC. For example, the external entity is connected to an Internet network that encompasses the ARPC generation server. In such a case, the external entity preferably stores an Internet address relating to the ARPC generation server and uses a HyperText Transfer Protocol (or HTTP) to exchange an ARQC and the generated ARPC with the ARPC generation server.

As external entity, it can be constituted by a token, like a SIM type smart card, possibly in cooperation with a mobile telephone, as terminal.

As SIM type smart card, it can be a smart card that securely stores an International Mobile Subscriber Identity (or IMSI), as a unique number associated with all GSM (acronym for "Global System for Mobile communications") and UMTS (acronym for "Universal Mobile Telecommunication System") network mobile phone users. The IMSI is used to identify a subscriber before at least one telecommunication network, so as to have the right to use it(them).

The SIM type smart card can be, for example, a SIM smart card for a GSM network, a Universal Subscriber Identity Module (or USIM) for a UMTS network, a Removable User Identity Module (or RUIM) and/or a Code Division Multiple Access (or CDMA) Subscriber Identity module (or CSIM) for a CDMA network. Naturally, the just aforementioned list is not exhaustive.

However, it is only for exemplifying purposes and is not considered to reduce the scope of the present invention.

For example, instead of being constituted by a SIM type smart card, the token is constituted by a smart USB dongle (that does not require any specific reader within a host computer), a mass-storage card like a MMC (acronym for "MultiMediaCard"), a SD (acronym for "Secure Digital") card, and/or any other electronic medium that may have different form factors. According to still other examples, the token can also be a chip to be fixed, possibly in a removable manner, to a host computer, or a chip to be soldered within a host computer, as terminal.

Moreover, instead of being constituted by a mobile telephone, the terminal can be, for example, a personal computer, a desktop computer, a laptop computer, and/or a PDA.

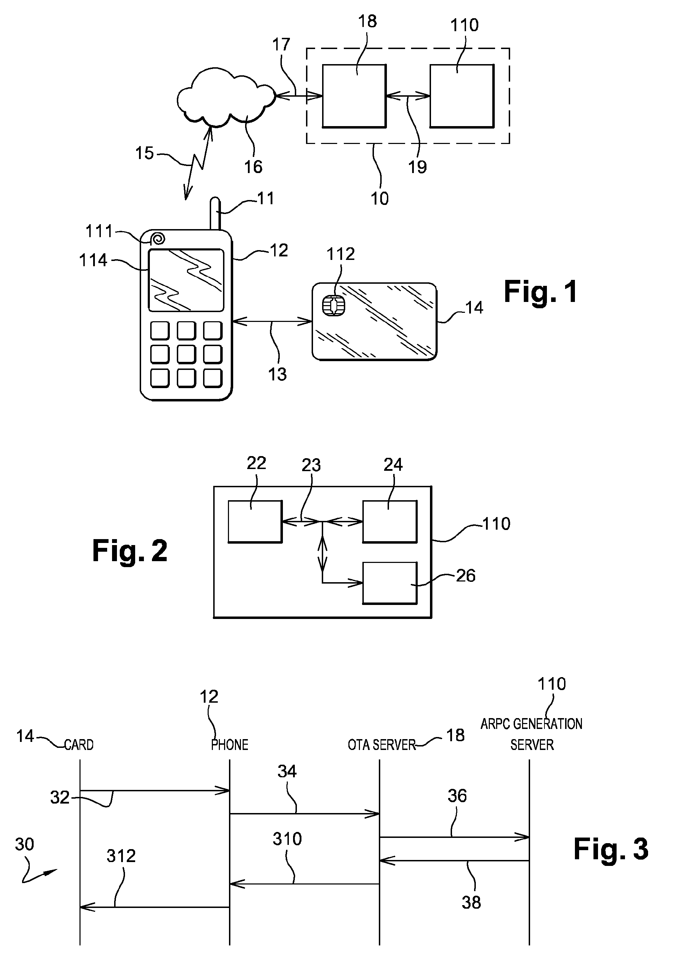

Figure 1 shows, among others, an electronic system 10 for communicating an ARPC to a SIM type smart card 14, as an external entity.

The system 10 for communicating an ARPC comprises an OTA server 18 and a server 110 for issuing an ARPC to the SIM type smart card 14.

The SIM type smart card 14 is coupled to a mobile telephone 12, in order to cooperate with each other, so as to notably exchange data, through the OTA server, with the server 110 for issuing an ARPC.

For simplicity, the mobile telephone 12 and the SIM type smart card 14 are termed hereinafter respectively the phone 12 and the card 14.

The card 14 is inserted within the phone 12.

The phone 12 includes, as data processing means, at least one microprocessor, volatile and non-volatile memories, at least two Input/Output (or I/O) interfaces linked together through a data and control bus (not shown).

The microprocessor processes and controls data within the phone 12 and/or data to be exchanged with outside of the phone 12. The microprocessor controls and communicates with all the components of the phone 12, such as the I/O interfaces.

The memories store data notably relating to an Operating System and applications supported by the phone 12.

The I/O interfaces comprise a contact interface (not represented) of the type ISO (acronym for « International Standard Organization ») 7816, as one I/O interface, to interact with the card 14. The contact interface is intended to let communicate, through a bi-directional link 13, the phone 12 with the card 14.

The I/O interfaces comprise a first antenna 11 for communicating, over-the-air (or OTA), via a long range radiofrequency bi-directional link 15, through a cellular telecommunication network 16, with the OTA server 18.

According to a variant (not represented), instead of a wireless I/O interface constituted by the first antenna, the phone 12 is connected, through a bidirectional wire link, to the system 10 for communicating an ARPC.

The cellular telecommunication network 16 is connected, for example, through a cable, via a bi-directional link 17, to the OTA server 18. The cellular telecommunication network 16 is adapted to implement at least one communication mode, such as a 2G (acronym for a second generation network, i.e. GSM for "Global System for Mobile communications"), a GPRS (acronym for "General Packet Radio Service"), 3G (acronym for a third generation network, i.e. UMTS for "Universal Mobile Telephone System") and/or CDMA (acronym for a "Code Division Multiple Access") communication mode(s).

As known per se, the GPRS and 3G networks allow to exchange data with data rates higher than the data rate provided by the 2G network.

The phone 12 has the capacity to communicate with the OTA server 18.

The phone 12 is adapted to also communicate data, through the bidirectional link 13 by using Application Protocol Data Unit (or APDU) with the card 14.

To interact with the card 14, the phone 12 is able to implement a SIM ToolKit (or STK) mechanism by which the card 14 acts as a master while the phone 12 acts as a slave. Thus, the phone 12 is adapted to interpret any proactive command originating from the card 14. Thanks to such a feature, the card 14 may send, when applicable, any request, in particular a request for generating an ARPC (intended to the ARPC generation server 110), so as to receive, as a corresponding response, the generated ARPC.

The phone 12 is preferably a mobile NFC phone that is suitable to exchange data, through a short range radio link, with an external payment terminal. The chip relating to the NFC is awaken when approaching an electromagnetic field emitted by the payment terminal.

The card 14 includes a chip 112.

The chip 112 includes, as data processing means, at least one microprocessor, volatile and non-volatile memories, at least one I/O interface linked together through a data and control bus (not shown).

The microprocessor processes and controls data within the chip 112 and/or data to be exchanged with outside of the chip 112. The microprocessor controls and communicates with all the components of the chip 112, such as the I/O interface.

The memories store data notably relating to an Operating System and applications supported by the chip 112.

The I/O interfaces comprise a contact interface (not represented) of the type ISO (acronym for « International Standard Organization ») 7816, as one I/O interface, to interact with the phone 12. The contact interface is intended to let communicate, through the bi-directional link 13, the card 14 with the phone 12.

According to a preferred embodiment, the contact interface contains one contact pad used for implementing a Single Wire Protocol (or SWP), to communicate with the phone 12 for accessing one or several applications integrated within a server (also termed Smart Card Web server or SCWS) embedded within the card 14, termed hereinafter a card server.

Among the applications supported by the card 14, there can be at least one payment application that operates in cooperation, through the contact pad reserved for SWP and a second antenna 111 born by the phone 12, with an electronic payment terminal (not represented). Since the card 14 can support the payment application, the card 14 is assumed to act as a payment card with respect to the electronic payment terminal. A user has to approach with the phone 12 the electronic payment terminal equipped with an antenna, so as to be able to let communicate the card 14 with it through the second phone antenna 111.

According to an alternative, instead of accessing the payment application through the contact pad reserved for SWP, the payment application is accessed via the ISO 7816 contact interface.

According to a variant, instead of the contact pad reserved for SWP used for communicating through the second phone antenna 111 with an electronic payment terminal, the card 14 is itself provided with an antenna (not represented).

According to another embodiment, instead of the contact interface, the card 14 and the phone 12 are coupled to each other, through a short range radiofrequency link, as a contact-less interface, such as a Bluetooth (registered trademark) or a Wifi (registered trademark) link.

The payment application that is installed within the card 14 can consist of an off-line transaction or an on-line transaction involving an external server. The external server can be connected to the electronic payment terminal.

An access to the payment application can be rendered possible, through a pop-up window displayed upon a phone display screen 114, to propose an interaction with a user. The user can choose to validate or not an off-line transaction that does not involve any communication with an external server to authorize a payment of the banking transaction.

Once at least one payment transaction has been performed, it increments at least one counter, such as an EMV counter, e.g. a cumulative amount counter. When the EMV counter(s) reach(es) a predetermined threshold(s) stored within the card 14, the next transaction is forced to be performed on-line.

The EMV data to which we refer is for example the data described within an EMV book 2 version 4.1. entitled "Integrated Circuit Card Specifications for Payment Systems" dated May 2004.

It is useful to reset the EMV counter stored within the card 14, so as to allow at least another payment transaction. Otherwise, any new off-line transaction may be refused.

To reset the EMV counter of the card 14, the card 14 simulates an on-line transaction using an amount value of zero euro. To complete the transaction, the ARPC needs to be calculated.

The card 14 is able to generate or store an ARQC.

The card 14 sends, among other data, as a request, the ARQC, through the phone 12 and the OTA server 18, to the ARPC generation server 110.

To communicate with the OTA server 18, the card 14 uses through the phone 12 a communication channel using Short Message Service (or SMS) protocol.

According to another embodiment, the card 14 requires the phone 12 to open an Internet Protocol (or IP) communication channel using Transport Communication Protocol/Internet Protocol (or TCP over IP) to connect to the OTA server 18. In such another embodiment, the OTA server 18 is used as a converter of communication protocols, where the OTA server 18 exchanges data, on the one hand, with the phone 12 by using a mobile radio communication mode, such as GPRS, and, on the other hand, with the ARPC generation server 110 by using a HTTP. The phone 12 thus acts as an Internet client and accesses to the Internet world through the OTA server 18. Furthermore, the OTA server 18 is the sole entity to know the IP address of the ARPC generation server 110.

According to still another embodiment, the card 14 is the sole entity to know the IP address of the ARPC generation server 110, for example when there is no intermediary entity, such as an OTA server, to connect to the ARPC generation server 110.

The OTA server 18 is therefore an obliged intermediary entity between the card 14 and the ARPC generation server 110.

The OTA server 18 formats data to be transmitted, on the hand, through the phone 12, to the card 14 by using the SMS format, and on the other hand, to the ARPC generation server 110 by using the HTTP format.

The OTA server 18 can be integrated within an entity of a system (not shown) that can be constituted by the system usually known as a back-end OTA system. The OTA server 18 can be directly or indirectly controlled by a telecommunication operator.

The OTA server 18 is connected, via a bi-directional link 19, to the ARPC generation server 110. The bi-directional link 19 is constituted either by a cable or a wireless link, like an infra red link, or any other link.

The OTA server 18 and the ARPC generation server 110 are both able to exchange data by using a HTTP.

The OTA server 18 and the ARPC generation server 110 can implement between each other a secured communication, like a Virtual Personal Network, so as to protect the thus exchanged data.

The ARPC generation server 110 will be further described in relation with the figure 2.

Figure 2 schematically shows components incorporated within the ARPC generation server 110.

The ARPC generation server 110 is intended to cooperate with the OTA server, as an intermediary entity, used to interact with an application supported at least in part by the card 14, as the addressee of the ARPC to be delivered.

The ARPC generation server 110 comprises, as data processing means, at least one microprocessor 22, volatile and non volatile memories 24 and at least one I/O interface 26 linked together through a data and control internal bus 23.

The I/O interface 26 is used to exchange data, through the OTA server 18, with outside of the ARPC generation server 110.

The microprocessor 22 executes notably any application stored within the memories 24.

The microprocessor 22 controls and communicates with all the components of the ARPC generation server 110, such as the memories 24 to read them and possibly write into them.

The memories 24 store data, in particular data relating to an application using at least one algorithm to calculate an ARPC. Such an application can be targeted by using a specific Application Identifier, said AID, that is known to its interlocutor, namely the OTA server 18. The memories 24 store data relating to at least one Application Cryptogram master key for a concerned bank.

The memories 24 preferably store a set of at least one application cryptogram master key, said AC master key, relating to one or several banks.

According to an alternative, the ARPC generation server 110 accesses through its I/O interface 26 an external memory that stores a set of at least one AC master key.

The memories 24 can be constituted by one or several EEPROM (acronym for "Electrically Erasable Programmable Read-Only Memory"), one or several ROM (acronym for "Read Only Memory"), one or several Flash memories, and/or any other memories of different types, like one or several RAM (acronym for "Random Access Memory").

It is to be noted that the counter reset mechanism controlled by the ARPC generation server 110 is fully transparent to the phone user, i.e. the phone user does not need neither to be informed nor to be involved for resetting the EMV counters stored within the card 14.

The ARPC generation server 110 is arranged to receive from outside through the I/O interface 26, among other data, an ARQC to trigger the generation of the ARPC.

The ARPC generation server 110 is able to select one AC master key among the set of at least one AC master key based upon a received bank identification number, said BIN, and a received Issuer Application data, said IAD.

More exactly, once the ARPC generation server 110 receives a request, and other data, such as the BIN and the IAD, the ARPC generation server 110 is adapted to issue an ARPC based upon the received ARQC, the received IAD and the selected AC master key.

The memories 24 can store at least one application providing at least one security function, a digital signature, a card identification, a card authentication, an on-board key generation, and/or a secure exchange for on-line transactions. The memories 24 may store credential(s), such as an encryption key, like a 3-Data Encryption System, so as to protect the data that is thus exchanged with the external entity. The credentials can be used to authenticate the ARPC generation server 110 before any external entity, like the OTA server 18 and/or sign data to be sent to outside world, like the OTA server 18, possibly by using data that is received from outside.

The ARPC generation server 110 is adapted to issue an ARPC to an external requesting entity.

The ARPC generation server 110 is adapted to autonomously calculate an ARPC without using neither any bank acquiring network nor any bank issuing network.

The ARPC generation server 110 can be directly or indirectly controlled by a banking operator. The ARPC generation server 110, as a web server, and therefore a single entity, is easy to be installed for a banking operator. Thanks to the ARPC generation server 110, an EMV counter reset mechanism is easy and therefore cheap to implement. Such an EMV counter reset mechanism does not need an interconnection with any other banking system. The ARPC generation server 110 has just to be accessible from an OTA server, as an entry point to access an issuing of an ARPC.

The ARPC generation server 110 is adapted to compute an ARPC from an ARQC received through the OTA server from the card 14 and checked by the ARPC generation server 110.

Once the ARPC generation server 110 has generated the ARPC, the ARPC generation server 110 sends, through the OTA server 18 and the phone 12, to the card 14 the generated ARPC.

Figure 3 depicts an example of a message flow 30 that involves the card 14, the phone 12, the OTA server 18 and the ARPC generation server 110.

It is assumed that the card 14, and more exactly its chip 112, has triggered an execution of an application, such as an applet A, for simulating an on-line transaction of an amount value of zero euro. For example, the Operating System of the card 14 executes a script contained within a SMS message originating from the OTA server 18 and forwarded by the phone 12. The script is interpreted and executed by the chip 112. The execution of the script allows the card 14 to select, through a first APDU, the application A thanks to an identifier of the targeted application A, or termed Application IDentifier, said AID. The execution of the script causes a sending of a second APDU to select a first function comprised within the application A, namely the application for simulating an on-line transaction of an amount value of zero euro, to initiate the transaction. The function comprised within the application A provokes a selection of a banking application B thanks to its AID, such as another applet B, to simulate the on-line transaction. The communication between the two applets A and B supported by the card 14 itself is performed by interposing the Operating System of the card 14 while exchanging data by using APDU. To do this, once the banking applet B has been launched and is processing, the execution of the script by the Operating System of the card 14 remains blocked upon the second APDU until the applet A returns a message through another APDU. The execution of the applet A terminates by returning a message through another APDU to the Operating System of the card 14, said return message. Such a return message includes all the data allowing to calculate the ARPC, namely a Primary Account Number, said PAN, a Pan Sequential Number, said panSeq, an ARQC, an Application Transaction Counter, said ATC, and an Issuer Application Data, said IAD. Once the Operating System of the card 14 has received the return message, the Operating System of the card 14 causes a sending of a return message intended to the OTA server 18.

The card 14 sends to the phone 12 a request 32 encompassing the return message comprising the following data, namely ARQC, the PAN, the panSeq, the ATC and the IAD by using APDU.

The phone 12 receives the request 32 and encapsulates the APDU request within an SMS to be sent.

Then, the phone 12 sends to the OTA server 18 a SMS request 34 with the return message.

Once the OTA server 18 receives the request with the return message, the OTA server 18 deduces from the received data, and in particular the PAN, by extracting the six first digits of the PAN, a Bank Identification Number, said BIN.

The OTA server 18 retrieves the AID of the application supported by the ARPC generation server 110 to trigger its execution. The OTA server 18 stores the concerned AID within its memories.

Then, the OTA server 18 forwards the request with the return message accompanied with the BIN, the targeted AID and the concerned Mobile Subscriber Integrated Service Digital Network, said MSISDN, by sending a corresponding HTTP request 36 to the ARPC generation server 110. To do this, the OTA server 18 stores an IP address of the ARPC generation server 110 to be involved.

Once the ARPC generation server 110 receives the return message with the following data, namely the ARQC, the PAN, the panSeq, the ATC, the IAD, the BIN, the AID and the MSISDN, the ARPC generation server 110 uses them to determine the ARPC.

During a first phase, the ARPC generation server 110 verifies the received ARQC. Otherwise, the ARPC generation server 110 may send back to the OTA server 18 a message (not shown) that indicates that the received ARQC is not the right expected one.

During a second phase, only when the ARPC generation server 110 has successfully recognized the ARQC, the ARPC generation server 110 deduces thanks to the received BIN and a Derived Key Index, said DKI, a corresponding AC master key, by selecting one AC master key among the set of AC master key stored within the ARPC generation server 110. The DKI is comprised within the IAD.

During a third phase, the ARPC generation server 110 determines, thanks to the IAD, or another EMV data, one algorithm to be used among possibly several algorithms. This third phase may be optional when only one algorithm is possible, avoiding thus a choice to be taken among several algorithms.

During a fourth phase, the ARPC generation server 110 calculates the ARPC based upon the received ARQC, the selected AC master key and the received IAD.

Once the ARPC generation server 110 has generated the ARPC, the ARPC generation server 110 sends back to the OTA server 18 a HTTP response 38 with the generated ARPC. Furthermore, the HTTP response may encompass an Authorisation Response Code, said ARC. The ARC is set within the ARPC generation server 110. According to another embodiment, the ARC is set within the application A for simulating an on-line transaction of an amount value of zero euro supported by the card 14 and sends from the card 14, with the other EMV data (through the phone 12 and the OTA server 18), to the ARPC generation server 110.

Then, the OTA server 18 receives the HTTP response, the OTA server 18 formats a SMS by integrating, besides the concerned MSISDN, a Toolkit Application Reference, said TAR, as the AID of the targeted applet A, a script to be executed by the Operating System of the card 14, and, when applicable, a parameter specifying that the OTA server 18 requests a return message with a corresponding result, the received ARPC and possibly the received ARC. The parameter specifying that the OTA server 18 request a return message is for example a so-termed Proof of Receipt, said POR, within a GSM network.

The script to be executed by the Operating System of the card 14 comprises, as parameters, the generated ARPC and, when applicable, the ARC.

The OTA server 18 sends to the phone 12 the thus formatted SMS 310.

The phone 12 receives the SMS 310 and encapsulates it within an APDU thus formatted.

Then, the phone 12 sends to the card 14 the formatted APDU 312.

The Operating System of the card 14 executes the script contained within the formatted APDU. To do this, The Operating System of the card 14 selects, through a first APDU, the applet A for simulating the on-line transaction, and sends a second APDU to execute a second function while communicating it, as parameters, the generated ARPC, and, when applicable, the ARC so as to terminate the initiated on-line transaction. A call to the second function is performed like a call for the first function that described hereinabove. Once the ARPC has been received and interpreted by the card 14, the ARPC generation server 110 is thus authenticated and the card 14 resets the concerned EMV counter.

When applicable, i.e. when the OTA server 18 has requested a return message, for example through a POR, then the card 14 sends back, though the phone 12, to the OTA server 18, a return message with a corresponding result of the on-line transaction, namely like a "OK" to specifies that the transaction has been successfully performed, or, otherwise, a "NOK".

## Claims

1. A method (30) for communicating an authorization response cryptogram, said ARPC, to an external entity, such as notably a token (12), the token being connected to a first server (18),
**characterized in that** the method comprises the following steps:
- the token sends, through the first server, to one and the same server (110) dedicated to generating an ARPC, said ARPC generation server, pieces of data (32) including at least an authorization request cryptogram, said ARQC;
- the ARPC generation server generates an ARPC based upon the received ARQC; and
- the ARPC generation server sends, through the first server, to the token, the generated ARPC (38).

2. Method according to claim 1, wherein the first server and the generation server exchange data by using a Hypertext Transfer Protocol.

3. Method according to claim 1 or 2, wherein, the token being coupled to a terminal (12),
- the token sends, through the terminal and the first server, to the ARPC generation server, pieces of data; and
- the ARPC generation server sends, through the first server and the terminal, to the token, the generated ARPC.

4. Method according to claim 3, wherein the token and the terminal exchange data (32, 312) by using Application Protocol Data Unit.

5. Method according to claim 3 or 4, wherein the terminal and the first server exchange data (34, 310) by using Short Message Service, as a communication protocol.

6. Method according to any of claims 1 to 5, wherein the pieces of data further include a bank identification number, said BIN, said ARPC generation server storing or accessing to a set of at least one application cryptogram master key, said AC master key, the ARPC generation server selects one AC master key among the set of at least one AC master key based upon the received BIN.

7. Method according to any of claims 1 to 6, wherein the pieces of data further include a bank identification number, said BIN, an issuer application data, said IAD, and the ARPC generation server selects one AC master key among the set of at least one AC master key based upon the received BIN and IAD, and/or the ARPC generation server generates an ARPC based upon the received ARQC, the selected AC master key and the received IAD.

8. A system (10) for communicating an authorization response cryptogram, said ARPC, to an external entity, such as notably a token (12),
**characterized in that** the system comprises a first server (18) and one and the same server (110) dedicated to generating an ARPC, said ARPC generation server,
and **in that** the ARPC generation server is adapted to:
- receive pieces of data (36) including at least an authorization request cryptogram, said ARQC;
- generate an ARPC based upon the received ARQC; and
- send, through the first server, to the external entity, the generated ARPC (38).

9. System according to claim 8, wherein the ARPC generation server comprises a web server and/or the first server comprises an over-the-air server, said OTA server.

10. System according to claim 8 or 9, wherein the system further comprises a terminal (12), the terminal comprising at least one element belonging to a group comprising:
- a Personal Computer;
- a mobile telephone;
- a Personal Digital Assistant.
